# EUROPEAN PATENT APPLICATION

(11) **EP 4 797 566 A1**
(43) Date of publication of application: **26.08.2026**
(21) Application number: 26157405.7
(22) Date of filing: 10.02.2026
(51) Int. Cl.: H04B 7/185

(54) **SATELLITE COMMUNICATION METHOD, TERMINAL, SATELLITE, COMMUNICATION SYSTEM, AND STORAGE MEDIUM**

(30) Priority: 19.02.2025 CN 202510186221
(71) Applicant: GUANGDONG OPPO MOBILE TELECOMMUNICATIONS CORP., LTD., Dongguan, Guangdong 523860 (CN)
(72) Inventor: PENG, Bo, Dongguan, Guangdong, 523860 (CN); MA, Jinshan, Dongguan, Guangdong, 523860 (CN)
(74) Representative: Novagraaf Technologies

(57) **Abstract**

A satellite communication method, a terminal, a satellite, a communication system, and a storage medium are provided, which relate to the field of communication technologies. The satellite communication method is applied to a terminal and includes: receiving (S302) a spread-spectrum signal transmitted from a satellite; and performing (S304) despreading processing on the spread-spectrum signal and obtaining notification information sent from the satellite. The spread-spectrum signal is obtained through the satellite performing spread-spectrum processing based on the notification information. The notification information is configured to notify the terminal that a satellite communication service exists.

## Description

### TECHNICAL FIELD

Embodiments of the present disclosure relate to the field of communication technologies, in particular, to a satellite communication method, a terminal, a satellite, a communication system, and a storage medium.

### BACKGROUND

With the continuous advancement of communication technologies, an increasing number of terminals are equipped with satellite communication capabilities. Satellite communication offers a wide coverage range, reaching remote and sparsely populated areas such as oceans, mountainous regions, and polar zones, etc., thereby providing reliable communication services.

However, currently, most terminals may only establish a connection with a satellite network and perform communication after a user actively initiates a communication request and manually adjusts the antenna to align with the satellite.

### SUMMARY

Some embodiments of the present disclosure provide a satellite communication method, a terminal, a satellite, a communication system, and a storage medium, in which the terminal is capable of obtaining notification information sent from the satellite in real time without performing a satellite alignment operation and without the need to maintain a satellite-aligned posture.

In a first aspect, some embodiments of the present disclosure provide a satellite communication method applied to a terminal. The method includes: receiving a spread-spectrum signal transmitted from a satellite; and performing despreading processing on the spread-spectrum signal and obtaining notification information sent from the satellite. The spread-spectrum signal is obtained through the satellite performing spread-spectrum processing based on the notification information. The notification information is configured to notify the terminal that a satellite communication service exists.

In a second aspect, some embodiments of the present disclosure provide a satellite communication method applied to a satellite. The method includes: performing spread-spectrum processing on notification information and obtaining a spread-spectrum signal; and transmitting the spread-spectrum signal to a terminal, for indicating the terminal to perform despreading processing on the received spread-spectrum signal and obtain the notification information. The notification information is configured to notify the terminal that a satellite communication service exists.

In a third aspect, some embodiments of the present disclosure provide a terminal. The terminal includes a first memory and a first processor. The first memory stores a first computer program. The first processor, when executing the first computer program, is configured to perform an operation of the method described above in the first aspect.

In a fourth aspect, some embodiments of the present disclosure provide a satellite. The satellite includes a second memory and a second processor. The second memory stores a second computer program. The second processor, when executing the second computer program, is configured to perform an operation of the method described in the second aspect.

In a fifth aspect, some embodiments of the present disclosure provide a communication system. The communication system includes the terminal and the satellite described above.

In a sixth aspect, some embodiments of the present disclosure provide a computer-readable storage medium, on which a computer program is stored. The computer program, when executed by a processor, is configured to perform an operation of the method described above.

A satellite communication method, a terminal, a satellite, a communication system, and a storage medium are described above. The terminal may be capable of receiving a spread-spectrum signal transmitted from the satellite, performing despreading processing on the spread-spectrum signal, and obtaining notification information sent from the satellite. The method may establish a new paging channel of the satellite between the satellite and the terminal, perform spread-spectrum processing on the notification information by the satellite, and perform despreading processing on the spread-spectrum signal by the terminal, thereby introducing process gain into a receive chain of the terminal. The above may enable the terminal to obtain the notification information from the spread-spectrum signal that is transmitted from the satellite and to the ground over a long distance, which improves the receiving sensitivity of the terminal and reduces the posture requirements for the terminal to receive the notification information, or even imposes no posture requirement. Consequently, real-time reception of notification information by the terminal may be achieved. That is, the terminal may not need to perform a satellite alignment operation or maintain a satellite-aligned posture, and may remain in a network-access standby state. In other words, the terminal may receive notification information from the satellite in real time, reducing a chance of missing or delayed awareness of the existence of satellite communication service, thereby improving the communication performance of the terminal. Furthermore, since spread-spectrum process gain is introduced and the receiving sensitivity of the terminal is improved, it may be unnecessary to increase the transmitting power of the satellite, and the original transmitting power may be maintained. Thus, the original circuit structure may be reused. Through introducing a spread-spectrum module that supports spread-spectrum processing in the satellite and a despreading module that supports despreading processing in the terminal, real-time reception of notification information by the terminal may be realized. The above solution may be simple to implement and may reduce modification difficulty.

### BRIEF DESCRIPTION OF THE DRAWINGS

In order to describe the technical solutions in some embodiments of the present disclosure or in the related art more clearly, the accompanying drawings used in the embodiments or in the description of the related art are briefly introduced below. It is apparent that the drawings described below may merely illustrate some embodiments of the present disclosure, and for those skilled in the art, other drawings may be obtained based on these drawings without any inventive effort.
FIG. 1 is a schematic structural view of a communication system according to an embodiment.
FIG. 2 is a schematic structural view of a communication system according to another embodiment.
FIG. 3 is a flowchart of a satellite communication method according to an embodiment.
FIG. 4 is a radiation schematic view of an antenna of a terminal according to an embodiment.
FIG. 5 is a flowchart of spread-spectrum processing and despreading processing according to an embodiment.
FIG. 6 is a flowchart of a satellite communication method according to another embodiment.
FIG. 7 is a flowchart of a satellite communication method according to yet another embodiment.
FIG. 8 is a first schematic structural view of a terminal according to an embodiment.
FIG. 9 is a second schematic structural view of the terminal according to an embodiment.
FIG. 10 is a third schematic structural view of the terminal according to an embodiment.
FIG. 11 is a fourth schematic structural view of the terminal according to an embodiment.
FIG. 12 is a schematic structural view of a satellite according to an embodiment.
FIG. 13 is a schematic structural view of a satellite according to another embodiment.
FIG. 14 is a fifth schematic structural view of the terminal according to an embodiment.
FIG. 15 is a schematic structural view of a terminal according to yet another embodiment.

### DETAILED DESCRIPTION

In order to make the objectives, technical solutions, and technical effects of the present disclosure more clearly understood, the present disclosure is further described in detail below in conjunction with the accompanying drawings and embodiments. It should be understood that, the embodiments described herein are merely used to explain the present disclosure and are not intended to limit the present disclosure.

Since the altitude of communication satellites above the Earth ranges from hundreds of kilometers to tens of thousands of kilometers, the ultra-long communication distance may result in a great increase in signal attenuation. In order to ensure the quality and reliability of bidirectional communication, both terminals and satellites need to have strong receiving and transmitting capabilities. Otherwise, uplink signals transmitted from the terminals may be too weak to be correctly demodulated by the satellites, and vice versa, which will directly hinder the normal operation of communication.

Due to limitations in the receiving capability of the terminal, effective reception of satellite message may only be achieved in a case where a maximum radiation direction of a terminal antenna is precisely aligned with the satellite. In a case where the antenna is not correctly aligned with the satellite, a communication link may not be established. Thus, most existing terminals may be configured to establish a connection with a satellite network and perform communication, only after a user actively initiates a communication request and manually adjusts the antenna to align with the satellite.

In view of the above, some embodiments of the present disclosure provide a satellite communication method, a terminal, a satellite, a communication system, a storage medium, and a product, in which the terminal may be capable of obtaining notification information sent from the satellite in real time without performing a satellite alignment operation and without the need to maintain a satellite-aligned posture.

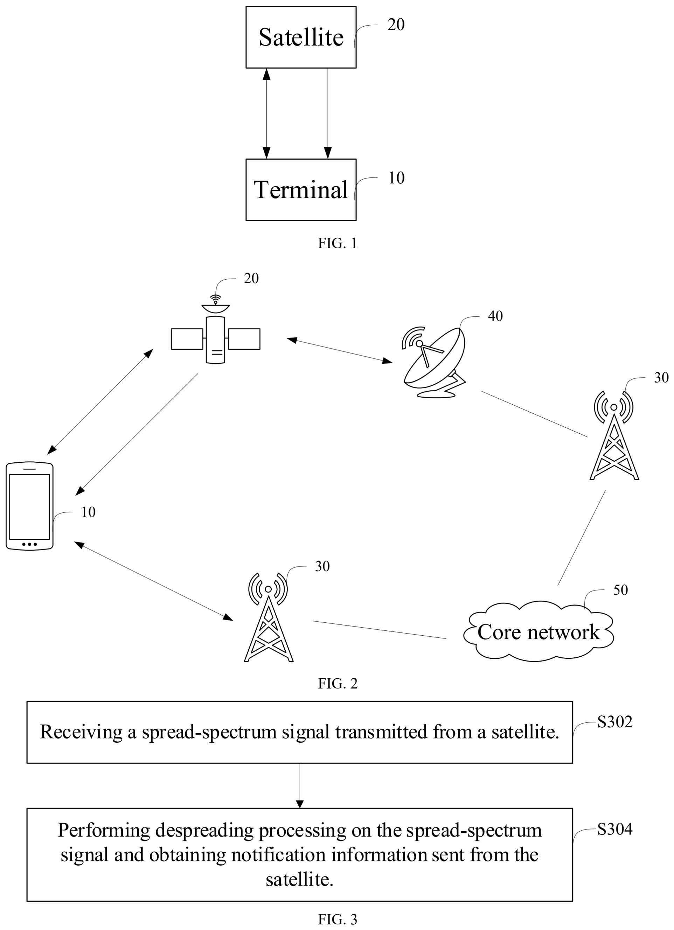

The satellite communication method provided by some embodiments of the present disclosure may be applied to or configured in a communication system as shown in FIG. 1 and FIG. 2. The communication system may include a terminal 10 and a satellite 20. A paging channel of the satellite 20 and a service communication channel may be established between the terminal 10 and the satellite 20. Through the paging channel of the satellite 20, the terminal 10 may be configured to obtain notification information according to a spread-spectrum signal transmitted from the terminal 10, thereby realizing real-time reception of the notification information. Through the service communication channel, the terminal 10 may be configured to receive a service signal transmitted from the satellite 20, and may be further configured to transmit a service signal to the satellite 20, thereby realizing communication between the terminal 10 and the satellite 20. The terminal 10 may include, but is not limited to, various personal computers, notebook computers, smartphones, tablet computers, Internet of Things devices, and portable wearable devices. The Internet of Things devices may include smart speakers, smart televisions, smart air conditioners, smart vehicle-mounted devices, and the like. The portable wearable devices may include smart watches, smart bands, head-mounted devices, and the like. The satellite 20 may include, but is not limited to, a navigation satellite 20, a communication satellite 20, or other types of satellites 20. The communication system may further include a base station 30, a gateway 40, and a core network 50, such as a 5G core network or the like. The terminal 10 may be configured to access a communication network formed by the communication system through the satellite 20 to realize communication.

In some embodiments, as shown in FIG. 3, a satellite communication method may be provided. The satellite communication method may be described by taking application of the satellite communication method to the terminal 10 shown in FIG. 1 and FIG. 2 as an example. The satellite communication method may include the following operations S302 and operation S304.

At operation S302, receiving a spread-spectrum signal transmitted from a satellite.

In some embodiments, the terminal 10 may be configured to be in a state that supports receiving the spread-spectrum signal, so as to receive the spread-spectrum signal transmitted from the satellite in real time. The terminal 10 being in the state that supports receiving the spread-spectrum signal, may be understood as that the terminal 10 supports receiving the spread-spectrum signal regardless of whether the terminal 10 is in a non-satellite-aligned posture or in a satellite-aligned posture.

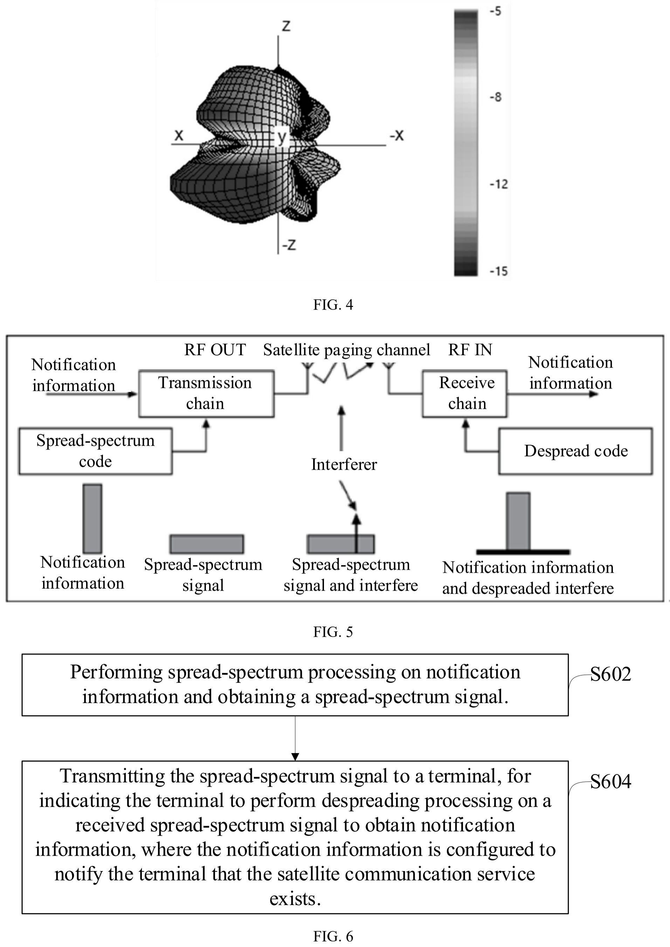

The satellite-aligned posture may refer to a posture in which a maximum radiation direction of an antenna points to the satellite 20, where the antenna may be an antenna configured to communicate with the satellite 20. Correspondingly, the non-satellite-aligned posture may refer to a posture in which the maximum radiation direction of the antenna does not point to the satellite 20. As shown in FIG. 4, a radiation schematic view of an antenna is provided. In a case where a satellite communication service is performed between the terminal 10 and the satellite 20 (the terminal 10 supports transmission and reception of service signals, and the satellite 20 supports transmission and reception of service signals), the terminal 10 may need to adjust a posture parameter, such as a pitch angle and an azimuth angle, etc., so that the maximum radiation direction of the antenna points to the satellite 20, so as to obtain optimal communication performance.

In some embodiments, the terminal 10 may include a paging message reception mode. The terminal 10 may support receiving the spread-spectrum signal in the paging message reception mode. As such, in a case where the terminal 10 operates in the paging message reception mode, the terminal 10 may be configured to receive the spread-spectrum signal transmitted from the satellite 20. In the paging message reception mode, relevant hardware in the terminal 10 that supports receiving the spread-spectrum signal may be in a working state, while other hardware in the terminal 10, such as hardware that supports service signals, may be in a powered-off state or a sleep state. In this way, not only is real-time reception of notification information by the terminal 10 realized, but power consumption of the terminal 10 may be further reduced, thereby improving endurance performance of the terminal 10.

At operation S304, performing despreading processing on the spread-spectrum signal and obtaining notification information sent from the satellite.

The notification information may be configured to notify the terminal 10 of an existence of the satellite communication service. It may be understood that the notification information plays a notification role. Compared with a signal transmitted during satellite communication service, the notification information may carry a smaller amount of information. For example, the amount of information of the notification information may be set to several bits, several bytes, or the like, which may be correspondingly set according to factors such as paging scenarios or the like and is not limited herein.

The satellite communication service may refer to a service for communication between the terminal 10 and the satellite 20. During a process of performing the satellite communication service between the terminal 10 and the satellite 20, the terminal 10 may support receiving and processing the service signal transmitted from the satellite 20, and may further support transmitting the service signal to the satellite 20. During the process of performing the satellite communication service between the terminal 10 and the satellite 20, the satellite 20 may support receiving and processing the service signal transmitted from the terminal 10, and may further support transmitting the service signal to the terminal 10. The service signal may be a signal that is not subjected to spread-spectrum processing. The service signal may support the satellite communication service between the terminal 10 and the satellite 20. The satellite communication service may include, but is not limited to, data transmission, video conferencing, television broadcasting, emergency communication, and the like. The data transmission service may include, but is not limited to, transmission of text, voice, images, and the like. It may be understood that, a case where text transmission is performed between the terminal 10 and the satellite 20 may correspond to a short message service scenario between the terminal 10 and the satellite 20. A case where voice transmission is performed between the terminal 10 and the satellite 20 may correspond to a telephone service scenario between the terminal 10 and the satellite 20. The satellite communication service may correspond to the notification information. In some embodiments, different types of satellite communication services may be represented by setting different types of notification information.

The spread-spectrum signal may be obtained through the satellite 20 performing spread-spectrum processing based on the notification information. As shown in FIG. 5, the spread-spectrum processing may refer to spreading a bandwidth of the notification information to a wider frequency band, so that the spread-spectrum signal obtained through the spread-spectrum processing resembles noise in the frequency domain. The spread-spectrum processing may improve anti-interference capability and security of communication of the satellite 20. Correspondingly, despreading processing may be understood as an inverse process of the spread-spectrum processing. The despreading processing may refer to performing recovery processing on the spread-spectrum signal after bandwidth expansion, so as to recover the notification information before spread-spectrum processing. A ratio of a bandwidth of the spread-spectrum signal to a bandwidth of the notification information may be referred to as a process gain. The process gain may be set according to factors such as paging requirements and the like, which is not limited herein.

It may be understood that since the notification information carries a small amount of information, transmission rate and transmission bandwidth required by the notification information may be low. Thus, in some embodiments of the present disclosure, the satellite 20 may be configured to perform spread-spectrum processing on notification information to be transmitted to obtain a spread-spectrum signal, and then to transmit the spread-spectrum signal to the ground. Correspondingly, in a case where the ground terminal 10 receives the spread-spectrum signal transmitted from the satellite 20, the terminal 10 may be configured to perform despreading processing on the spread-spectrum signal and to obtain the notification information sent from the satellite 20, thereby realizing real-time reception of the notification information by the terminal 10.

It should be noted that, under the premise of fixed modulation and coding schemes, receiving performance of the terminal 10 and communication quality may depend on a strength of a received signal (external noise may be ignored herein). The strength of the received signal may be greatly related to an environment or application scenario in which the terminal 10 is located. For example, holding the antenna of the terminal 10 by hand may cause degradation of antenna performance, thereby reducing strength of the signal received by the antenna. As another example, in a case where the maximum radiation direction of the antenna is not aligned with the satellite 20 to be communicated with, a signal strength of a signal that is transmitted from the satellite 20 and received by the terminal 10 may be weaker than a signal strength of such signal in a case where the antenna is aligned with the satellite 20.

In a case where physical attenuation of a signal is fixed, receiving sensitivity of a receiver of the terminal 10 may be adjusted through changing modulation and coding schemes. Based on the above, some embodiments of the present disclosure may introduce spread-spectrum technology at the satellite 20, which is a transmitting end, and introduce despreading technology at the terminal 10, which is a receiving end. In this way, process gain may be introduced in a transmission chain at the satellite 20 side and a receive chain at the terminal 10 side, further improving receiving sensitivity of the terminal 10, and reducing posture requirements for the terminal 10 to support real-time reception of the notification information, or even imposing no posture requirement. That is, the terminal 10 may not have to be in the satellite-aligned posture to receive notification information. Further, the terminal 10 may not have to actively initiate a request to obtain the notification information.

The receiving sensitivity of the terminal 10 without introducing despreading technology may be generally around -130 dBm. Taking the introduction of a process gain of 30 dB in the receive chain as an example, the receiving sensitivity of the terminal 10 in a state of supporting reception of the spread-spectrum signal may reach -160 dBm, achieving an improvement of 30 dBm in receiving sensitivity, thereby providing technical support for reducing posture requirements of the terminal 10 during communication with the satellite 20.

In the satellite communication method provided by some embodiments of the present disclosure, the terminal 10 may be capable of receiving the spread-spectrum signal transmitted from the satellite 20 and performing despreading processing on the spread-spectrum signal to obtain the notification information sent from the satellite 20. The method may establish a new paging channel of the satellite 20 between the satellite 20 and the terminal 10, perform spread-spectrum processing on the notification information by the satellite 20, and perform despreading processing on the spread-spectrum signal by the terminal 10, thereby introducing process gain into the receive chain of the terminal 10. In this way, the terminal 10 may be capable of obtaining notification information from the spread-spectrum signal that is transmitted from the satellite 20 and to the ground over a long distance, thereby improving receiving sensitivity of the terminal 10, reducing posture requirements for the terminal 10 to receive the notification information, or even imposing no posture requirement. As a result, real-time reception of notification information by the terminal 10 may be realized. That is, the terminal 10 may not have to perform a satellite alignment operation or to maintain the satellite-aligned posture, enabling the terminal 10 to remain in a network-access standby state. In other words, the terminal 10 may be enabled to receive notification information from the satellite 20 in real time, reducing missing or delayed awareness of satellite communication service. For example, a chance of missing services such as short messages and calls, etc., from a communication network of the satellite 20 may be reduced, thereby improving communication performance of the terminal 10. In addition, since some embodiments of the present disclosure introduce spread-spectrum process gain and improve receiving sensitivity of the terminal 10, it is not necessary to increase transmitting power of the satellite 20 and the original transmitting power can be maintained. Thus, an original circuit structure may be reused. Through introducing a despreading module that supports despreading processing into the terminal 10, real-time reception of notification information by the terminal 10 may be achieved, which is easy to implement and reduces modification difficulty.

In some embodiments, the satellite communication method may further include an operation of displaying prompt information according to the notification information. The prompt information may be configured to prompt a user that satellite communication service exists. In some embodiments, the terminal 10 may be configured to display prompt information on a user interface (UI) to prompt the user that the satellite communication service exists, for example, prompting the user of the terminal 10 to answer a call or reply to a short message. A way in which the terminal 10 displays the prompt information may include, but is not limited to, a pop-up window, a notification bar, or any other type of method, which may be set according to application requirements and actual scenarios and are not limited herein.

In some embodiments, at operation S304, performing despreading processing on the spread-spectrum signal and obtaining notification information sent from the satellite, may include the following operations: obtaining a despread parameter corresponding to the spread-spectrum signal, performing despreading processing on the spread-spectrum signal according to the despread parameter, and obtaining the notification information sent from the satellite.

The despread parameter may refer to a parameter involved in restoring the notification information from the spread-spectrum signal during the despreading process. The despread parameter may correspond to a spread-spectrum parameter involved in the spread-spectrum processing process. The despread parameter may include a despread code and a despread manner. The despread code may refer to a parameter required for performing despreading processing on the spread-spectrum signal, enabling the terminal 10 to identify the spread-spectrum signal and restore the notification information. The despread code may be the same as a spread-spectrum code involved in the spread-spectrum processing process. The despread manner may refer to a manner for performing despreading processing on the spread-spectrum signal. The despread manner may correspond to a spread-spectrum manner involved in the spread-spectrum processing process.

As shown in FIG. 5, spread-spectrum processing may be a process of introducing the spread-spectrum code and spreading notification information into a wider frequency band according to a preset spread-spectrum manner to obtain a spread-spectrum signal with a larger bandwidth. Correspondingly, despreading processing may be a process of restoring the spread-spectrum signal to notification information according to a despread code and a preset despread manner.

In some embodiments, the terminal 10 may be preconfigured to have a despread parameter corresponding to a spread-spectrum parameter according to an agreement or specification at the factory. Correspondingly, the satellite 20 may be preconfigured to have a spread-spectrum parameter corresponding to a despread parameter according to an agreement or specification. In some other embodiments, the satellite 20 may be configured to transmit the spread-spectrum parameter to the terminal 10. The terminal 10, after receiving the spread-spectrum parameter, may be configured to determine the spread-spectrum parameter as the despread parameter. In some other embodiments, the terminal 10 may be configured to customize a despread parameter and transmit the despread parameter to the satellite 20 and the satellite 20 may be configured to determine the despread parameter as the spread-spectrum parameter. In application, the terminal 10 may select an appropriate manner to obtain the despread parameter, which is not limited herein.

In some embodiments of the present disclosure, the terminal 10 may obtain the despread parameter corresponding to the spread-spectrum signal. The terminal 10 may further, based on the despread code in the despread parameter, perform despreading processing on the spread-spectrum signal, according to the despread manner in the despread parameter. The terminal 10 may then obtain the notification information sent from the satellite 20, thereby being capable of notifying the user of the existence of satellite communication service, providing technical support for introducing process gain into the receive chain to improve receiving sensitivity. In this way, the terminal 10 may be enabled to receive notification information in real time without missing or delaying reception of notification information. In addition, the terminal 10 may no longer be required to perform the satellite alignment operation or, in other words, may not need to maintain the satellite-aligned posture, realizing that the terminal 10 remains online and is capable of receiving notification information from the satellite 20 at any time, improving satellite communication performance of the terminal 10, and helping to enhance user experience.

In some embodiments, the despread code may include a first pseudo noise code (PN code). The despread manner may include a direct sequence despread manner. Correspondingly, the spread-spectrum code may include a third PN code. The spread-spectrum manner may include a direct sequence spread spectrum (DSSS) manner. The first PN code and the third PN code may be the same and may both be PN codes. The PN code may be a binary sequence that appears random but is actually generated based on a deterministic algorithm. The PN code may have good autocorrelation and cross-correlation properties. The deterministic algorithm may be preset and is not limited herein. The direct sequence despread manner may correspond to the DSSS manner.

In some embodiments, the terminal 10 may be configured to generate a first clock signal, generate the first PN code based on the first clock signal, and perform despreading processing on the spread-spectrum signal based on the first PN code and in accordance with the direct sequence despread manner. In this way, the terminal may obtain the notification information sent from the satellite 20 and may be further capable of displaying prompt information based on the notification information to prompt the user that the satellite communication service exists.

Correspondingly, the satellite 20 may be configured to generate a third clock signal, generate the third PN code based on the third clock signal, and perform spread-spectrum processing on the notification information based on the third PN code and in accordance with the DSSS manner. In this way, the satellite 20 may obtain a spread-spectrum signal and transmit the spread-spectrum signal to the terminal 10, thereby notifying the terminal 10 that the satellite communication service exists.

In some embodiments, the despread code may include a first frequency hopping code. The despread manner may include a frequency hopping despread manner. Correspondingly, the spread-spectrum code may include a second frequency hopping code, and the spread-spectrum manner may include a frequency hopping spread spectrum (FHSS) manner. The first frequency hopping code and the second frequency hopping code may be the same and may both be frequency hopping codes. A frequency hopping code may be a series of values specifying a frequency change sequence. The frequency hopping code may determine how a carrier frequency rapidly switches within predetermined time intervals. The frequency hopping despread manner may correspond to the FHSS manner.

In some embodiments, the terminal 10 may be configured to generate a second clock signal, generate the first frequency hopping code based on the second clock signal, and perform despreading processing on the spread-spectrum signal based on the first frequency hopping code and in accordance with the frequency hopping despread manner. In this way, the terminal 10 may obtain notification information sent from the satellite 20, and may further be capable of displaying prompt information according to the notification information to prompt the user to store satellite communication service.

Correspondingly, the satellite 20 may be configured to generate a fourth clock signal, generate the second frequency hopping code according to the fourth clock signal, and perform spread-spectrum processing on the notification information according to the second frequency hopping code and in accordance with the frequency hopping spread-spectrum manner. In this way, the satellite 20 may obtain a spread-spectrum signal and transmit the spread-spectrum signal to the terminal 10, and further notify to the terminal 10 that the satellite communication service exists.

In some embodiments, the despread code may include a first time hopping code. The despread manner may include a time hopping despread manner. Correspondingly, the spread-spectrum code may include a second time hopping code. The spread-spectrum manner may include a time hopping spread spectrum (THSS) manner. The first time hopping code and the second time hopping code may be the same and may both be time hopping codes. A time hopping code may be a series of values specifying pulse transmission time intervals and controls distribution of signals along a time axis. The time hopping despread manner may correspond to the THSS manner.

In some embodiments, the terminal 10 may be configured to generate a fifth clock signal, generate the first time hopping code based on the fifth clock signal, and perform despreading processing on the spread-spectrum signal based on the first time hopping code and in accordance with the time hopping despread manner. In this way, the terminal 10 may obtain notification information sent from the satellite 20, and may further be capable of displaying prompt information based on the notification information to prompt the user to store the satellite communication service.

Correspondingly, the satellite 20 may be configured to generate a sixth clock signal, generate the second time hopping code based on the sixth clock signal, and perform spread-spectrum processing on the notification information based on the second time hopping code and in accordance with the time hopping spread-spectrum manner. In this way, the satellite 20 may obtain a spread-spectrum signal and transmit the spread-spectrum signal to the terminal 10, thereby further notifying the terminal 10 that the satellite communication service exists.

It should be noted that the terms "first", "second", "third", "fourth", and the like used in the present disclosure may be used herein to describe various objects, but such objects are not limited by these terms, and these terms are merely used to distinguish one object from another. For example, without departing from the scope of the present disclosure, a first PN code may be referred to as a third PN code, and similarly, a third PN code may be referred to as a first PN code. Both the first PN code and the third PN code may be PN codes, where one is used by the terminal 10 for despreading processing, and the other one is used by the satellite 20 for spread-spectrum processing.

It should be noted that, in application, appropriate despread codes and despread manners may be selected to perform despreading processing on spread-spectrum signals, and corresponding spread-spectrum codes and spread-spectrum manners may be selected to perform spread-spectrum processing on notification information. The foregoing descriptions are merely exemplary, and other types of despread parameters and spread-spectrum parameters may alternatively be selected, which are not limited herein.

In some embodiments of the present disclosure, the despread code may include the first PN code and the despread manner may include the direct sequence despread manner. Alternatively, the despread code may include the first frequency hopping code and the despread manner may include the frequency hopping despread manner. Alternatively, the despread code may include the first time hopping code and the despread manner may include the time hopping despread manner. That is, the direct sequence despreading technology, frequency hopping despreading technology, or time hopping despreading technology may be adopted to perform despreading processing on spread-spectrum signals. In this way, multiple implementation manners may be provided to introduce process gain into the receive chain to increase receiving sensitivity, enabling the terminal 10 to receive notification information in real time without performing satellite alignment operations and without the need to maintain the satellite-aligned posture, thereby improving communication performance of the terminal 10.

In some embodiments, the terminal may include a paging message reception mode and a service communication mode. The satellite communication method may further include the following operations: switching to a service communication mode according to the notification information, and, in a case where the terminal operates in the service communication mode, transmitting a service signal to the satellite to perform a satellite communication service with the satellite.

The paging message reception mode may refer to a mode in which the terminal 10 supports reception of the spread-spectrum signal transmitted from the satellite 20. In a case where the terminal 10 operates in the paging message reception mode, the terminal 10 may be configured to receive the spread-spectrum signal in both the non-satellite-aligned posture and the satellite-aligned posture.

The service communication mode may refer to a mode in which the terminal 10 supports transmission and reception of the service signal. The service signal may be a signal that is not subjected to spread-spectrum processing or despreading processing and is configured to support the satellite communication service between the terminal 10 and the satellite 20. In a case where the terminal 10 operates in the service communication mode, the terminal 10 may perform the satellite alignment operation and perform satellite communication service with the satellite 20 in the satellite-aligned posture.

Power consumption of the terminal 10 in the paging message reception mode may be lower than power consumption of the terminal 10 in the service communication mode. For example, in the service communication mode, hardware in the terminal 10 that supports transmission and reception of service signals may all be in a working state. In the paging message reception mode, hardware in the terminal 10 that supports reception of spread-spectrum signals may be in a working state, and other hardware, such as hardware that supports transmission and reception of service signals, may be in a powered-off state or a sleep state. Based on the above, in the paging message reception mode, real-time reception of notification information may be realized, while reducing power consumption and improving endurance performance of the terminal 10. In the service communication mode, the terminal 10 may be configured to perform the satellite communication service with the satellite 20 to realize satellite communication.

The service signal may be generated based on the notification information and may be adopted to perform the satellite communication service with the satellite 20. The service signals may include, but are not limited to, text information, voice information, image information, and the like, so as to support short message services, telephone services, video services, and the like, which are not specifically limited herein.

It may be understood that, in a case where the terminal 10 operates in the service communication mode, the satellite communication service between the terminal 10 and the satellite 20 may be realized through the service communication channel. The service signal transmitted from each of the terminal 10 and the satellite 20 may not undergo spread-spectrum processing. The service signal received by each of the terminal 10 and the satellite 20 may not undergo despreading processing.

In some embodiments, the terminal 10 may be in a state that supports reception of the spread-spectrum signal, such as operating in the paging message reception mode. In this state, the terminal 10 may be configured to receive the spread-spectrum signal transmitted from the satellite 20. The terminal 10, after performing despreading processing on the spread-spectrum signal and obtaining the notification information sent from the satellite 20, may further be configured to switch to the service communication mode according to the notification information. For example, the terminal 10 may be switched from the paging message reception mode to the service communication mode, and may obtain a touch instruction corresponding to the notification information. The terminal 10 may transmit the service signal to the satellite 20 according to the touch instruction, so as to realize satellite communication service with the satellite 20. The touch instruction may indicate a touch operation performed by the user on the terminal 10 according to the prompt information. The user, after learning that the satellite communication service exists based on the prompt information, may open a communication application (APK) for the satellite 20, perform the satellite alignment operation according to a prompt on the communication application for the satellite 20, and transmit the service signal to the satellite 20, thereby realizing the satellite communication service with the satellite 20.

In some embodiments of the present disclosure, the terminal 10 may switch to the service communication mode according to the notification information. In a case where the terminal 10 operates in the service communication mode, the terminal 10 may transmit the service signal to the satellite 20 to perform the satellite communication service with the satellite 20. Power consumption of the terminal 10 in the paging message reception mode may be lower than power consumption of the terminal 10 in the service communication mode. The method may design different working modes, namely, the paging message reception mode and the service communication mode. As such, in a case where the satellite communication service is not required, the terminal 10 may operate in the paging message reception mode that has low power consumption, thereby supporting real-time reception of notification information while greatly reducing unnecessary energy consumption and improving endurance performance of the terminal 10. In a case where the notification information is received, the terminal 10 may switch to the service communication mode to support transmission and reception of service signals, so as to realize satellite communication services and ensure normal communication with the satellite 20, thereby improving communication performance of the terminal 10.

In some embodiments, the satellite communication method may further include the following operations: performing a satellite alignment operation with the satellite and establishing a network connection. The satellite alignment operation may refer to an operation of adjusting a posture of the terminal 10 such that a maximum radiation direction of an antenna of the terminal 10 points toward the satellite 20, so as to obtain optimal communication performance of the satellite 20. The network connection may refer to that the terminal 10 establishes a network connection with the communication network of the satellite 20 and becomes part of a communication system or the communication network of the satellite 20.

In some embodiments, in a case where the user uses the communication application for the satellite 20 for the first time, the terminal 10 may perform the satellite alignment operation and establish the network connection, thereby completing interaction with the communication network of satellite 20. For example, in a case where the user opens the communication application for the satellite 20 for the first time, the terminal 10 may transmit a network access request to the satellite 20 and receive a network access response transmitted from the satellite 20, so as to establish a network connection with the satellite 20. The network access request may indicate that the terminal 10 requests access to the communication network of satellite 20. The network access response may indicate a reply from the communication network of satellite 20 to the network access request initiated by the terminal 10. The satellite 20 may inform the terminal 10, through the network access response, whether the network access request is accepted and provide necessary configuration information to complete a network connection process. During the network connection process, the terminal 10 may perform authentication interaction with the communication network of satellite 20, enabling the terminal 10 to be a legitimate user in the communication network of satellite 20. Based on the above, a receiver of the terminal 10 may, after receiving the network access response, switch to a state that supports reception of the spread-spectrum signal, for example, switching to the paging message reception mode, and wait for the satellite 20 to transmit notification information. In this way, a basis may be provided for the terminal 10 to support real-time reception of notification information. During reception of notification information, no further satellite alignment operation may be required or no satellite-aligned posture may need to be maintained, reducing posture requirements of the terminal 10 and thereby improving communication performance of the terminal 10.

Based on the same inventive concept, some embodiments of the present disclosure may further provide a satellite communication method that may be applied to the satellite 20 shown in FIG. 1 and FIG. 2. An implementation solution provided by the satellite communication method for solving problems may be similar to the implementation solution recited in the above-described satellite communication method applied to the terminal 10. Thus, limitations in one or more satellite communication method embodiments provided below may refer to the limitations of the satellite communication method described above and will not be repeated herein.

In some embodiments, as shown in FIG. 6, a satellite communication method may be provided. The method may be applied to the satellite 20 in FIG. 1 and FIG. 2. The method may include operation S602 and operation S604 as follows.

At operation S602, performing spread-spectrum processing on notification information and obtaining a spread-spectrum signal.

Spread-spectrum processing and despreading processing are inverse processes, and reference may be made to the foregoing FIG. 5 and related descriptions for details, which will not be repeated herein. In some embodiments, in a case where the satellite communication service for the terminal 10 exists in a communication network of satellite 20, the satellite 20 may obtain notification information, perform spread-spectrum processing on the notification information, and obtain a spread-spectrum signal.

At operation S604, transmitting the spread-spectrum signal to a terminal, for indicating the terminal to perform despreading processing on the received spread-spectrum signal to obtain notification information, where the notification information is configured to notify the terminal that the satellite communication service exists.

The terminal 10 may be in a state that supports reception of spread-spectrum signals. In this state, the terminal 10 may support reception of the spread-spectrum signal transmitted from the satellite 20. The terminal 10 may, after receiving the spread-spectrum signal transmitted from the satellite 20, perform despreading processing on the spread-spectrum signal and obtain notification information. The terminal 10 may further generate prompt information based on the notification information. A processing process of the terminal 10 may refer to the foregoing related descriptions and will not be repeated herein.

In the satellite communication method provided by some embodiments of the present disclosure, the satellite 20 may perform spread-spectrum processing on notification information and obtain a spread-spectrum signal. The satellite 20 may transmit the spread-spectrum signal to the terminal 10, so as to indicate the terminal 10 to perform despreading processing on the received spread-spectrum signal to obtain notification information. The notification information may be configured to notify the terminal 10 that the satellite communication service exists. The method may establish a new paging channel of the satellite 20 between the satellite 20 and the terminal 10. The method may allow for performing spread-spectrum processing on notification information by the satellite 20, and performing despreading processing on the spread-spectrum signal by the terminal 10. In this way, process gain may be introduced into the transmission chain of the satellite 20. Correspondingly, process gain may be introduced into the receive chain of the terminal 10, enabling the terminal 10 to obtain notification information from the spread-spectrum signal that is transmitted from the satellite 20 and to the ground over a long distance, improving receiving sensitivity of the terminal 10, reducing posture requirements for the terminal 10 to receive notification information, or even imposing no posture requirement. In this way, real-time reception of notification information by the terminal 10 may be realized. That is, the terminal 10 may not need to perform the satellite alignment operation or may not need to maintain the satellite-aligned posture, enabling the terminal 10 to remain in a network-access standby state. In other words, the terminal 10 may be enabled to receive notification information from the satellite 20 in real time, reducing missing or delayed awareness of satellite communication service. For example, a chance of missing services such as short messages and calls, etc., from the communication network of the satellite 20 may be reduced, thereby improving communication performance of the terminal 10. In addition, since some embodiments of the present disclosure introduce spread-spectrum process gain and improve receiving sensitivity of the terminal 10, it is not necessary to increase transmitting power of the satellite 20 and the original transmitting power can be maintained. Thus, an original circuit structure may be reused. Through introducing the despreading module 120 that supports despreading processing into the terminal 10, real-time reception of notification information by the terminal 10 may be realized, which is easy to implement and reduces modification difficulty.

In some embodiments, the operation S602, performing spread-spectrum processing on notification information and obtaining a spread-spectrum signal, may include following operations: obtaining a spread-spectrum parameter corresponding to the notification information, performing spread-spectrum processing on the notification information according to the spread-spectrum parameter, and obtaining the spread-spectrum signal.

The spread-spectrum parameter may refer to a parameter involved in spreading notification information into a spread-spectrum signal during spread-spectrum processing. The spread-spectrum parameter may correspond to a despread parameter involved in despreading processing. The spread-spectrum parameter may include a spread-spectrum code and a spread-spectrum manner. The spread-spectrum code may refer to a parameter required for performing spread-spectrum processing on notification information, which may enable the satellite 20 to introduce process gain into the transmission chain. In this way, the terminal 10 may identify the spread-spectrum signal and restore notification information, thereby improving receiving sensitivity of the terminal 10. The spread-spectrum code may be the same as the despread code involved in despreading processing. The spread-spectrum manner may refer to a manner for performing spread-spectrum processing on notification information, which may correspond to the despread manner involved in despreading processing.

In some embodiments, the satellite 20 may perform spread-spectrum processing on notification information based on the spread-spectrum code in the spread-spectrum parameter and in accordance with the spread-spectrum manner in the spread-spectrum parameter, so as to obtain the spread-spectrum signal.

In some embodiments of the present disclosure, the satellite 20 may obtain the spread-spectrum parameter corresponding to notification information, and may perform spread-spectrum processing on the notification information according to the spread-spectrum manner in the spread-spectrum parameter to obtain the spread-spectrum signal, thereby introducing process gain into the transmission chain and providing technical support for introducing process gain into the receive chain of the terminal 10 to improve receiving sensitivity. In this way, the terminal 10 may be enabled to receive notification information in real time, without missing or delaying reception of notification information and without performing satellite alignment operation or the need to maintain the satellite-aligned posture. As such, the terminal 10 may remain online and be capable of receiving the notification information from the satellite 20 at any time, improving satellite communication performance of the terminal 10, and helping to enhance user experience.

In some embodiments, the above operation of obtaining a spread-spectrum parameter corresponding to the notification information, may include: obtaining a process gain of the spread-spectrum signal, and obtaining the spread-spectrum parameter corresponding to the notification information based on the process gain.

The process gain may represent a ratio of a bandwidth of the spread-spectrum signal to a bandwidth of the notification information. The bandwidth of the spread-spectrum signal may refer to a total bandwidth occupied by the spread-spectrum signal obtained after the notification information is subjected to spread-spectrum processing. The bandwidth of the notification information may refer to a minimum bandwidth required by a signal of the notification information.

The process gain may be determined according to factors such as paging requirements of the terminal 10 and receiving performance of the terminal 10, which is usually expressed in decibels (dB). By way of example, a range of the process gain may be 10 dB to 60 dB. For instance, the process gain may be 10 dB, 20 dB, 30 dB, 40 dB, 50 dB, 60 dB, or any other value between 10 dB and 60 dB, which is merely illustrative and is not limited herein.

In some embodiments, a frequency range of the spread-spectrum code may be determined according to the process gain and the notification information. Taking a process gain of 30 dB as an example, based on the foregoing description, since the notification information has a small amount of information, a frequency level of the spread-spectrum code may be in kHz. It may be understood that spread-spectrum processing and despreading processing are complementary processes. At a transmitting end, that is, on the satellite 20 side, spread-spectrum processing may be performed on a notification signal to introduce process gain. Correspondingly, at a receiving end, that is, on the terminal 10 side, the same process gain may be introduced.

In some embodiments of the present disclosure, the satellite 20 may obtain the process gain of the spread-spectrum signal, and obtain the spread-spectrum parameter corresponding to the notification information based on the process gain. Through using the process gain, the method may enable the terminal 10 to accurately demodulate and recover the received spread-spectrum signal, ensuring high-quality transmission of the notification information even in the presence of noise or interference. In addition, the satellite 20 may dynamically adjust the spread-spectrum parameter (such as a spread-spectrum code length and a spread-spectrum manner, etc.) according to the process gain, so as to adapt to different channel conditions and communication requirements. The method may allow the communication system to flexibly adjust according to actual environmental changes, thereby ensuring optimal communication effects between the satellite 20 and the terminal 10.

In some embodiments, the satellite communication method may further include: receiving a network access request sent from the terminal 10, and sending a network access response to the terminal 10 according to the network access request, for indicating the terminal 10 to operate in a paging message reception mode.

The network access request may be configured to indicate that the terminal 10 requests access to a communication network of satellite 20. The network access response may be configured to indicate a reply from the communication network of satellite 20 to the network access request initiated by the terminal 10. The satellite 20 may, through the network access response, notify the terminal 10 whether the network access request is accepted, and provide necessary configuration information to complete a network connection process.

In some embodiments, in a case where a user uses the communication application for the satellite 20 for the first time, the terminal 10 may perform a satellite alignment operation and send a network access request to the satellite 20. The satellite 20 may, after receiving the network access request sent from the terminal 10, perform authentication on the terminal 10 according to the network access request, generate a network access response, and send the network access response to the terminal 10. The terminal 10 may, after receiving the network access response, switch to the paging message reception mode, so as to support reception of the spread-spectrum signal transmitted from the satellite 20, thereby realizing real-time reception of notification information and achieving an objective of improving communication performance of the satellite 20.

In some embodiments, the above operation of sending the network access response to the terminal 10 according to the network access request, may include: obtaining identification information of the terminal 10 according to the network access request, determining an authorization detection result of the terminal 10 according to the identification information, and sending the network access response to the terminal 10 according to the authorization detection result.

The identification information may be configured to represent an identity and attributes of the terminal 10. The identification information may enable the satellite 20 to accurately identify, authenticate, and manage the terminal 10, thereby providing appropriate satellite 20 services and maintaining network security. The identification information may include, but is not limited to, a unique identity identifier, authentication information, or other types of information, which may be set according to a communication scenario of the satellite 20 and are not limited herein.

The authorization detection result may be configured to indicate whether the terminal 10 is legitimate in the communication network of satellite 20, or the authorization detection result may be understood as whether the terminal 10 is authorized to access and use services provided by the communication network of satellite 20. The authorization detection result may indicate that the terminal 10 is legitimate in the communication network of satellite 20, or that the terminal 10 is not legitimate in the communication network of satellite 20. The network access response may carry the authorization detection result, to notify the terminal 10 of the authorization detection result corresponding to the network access request sent at the present time. The network access response may be sent from the satellite 20 to the terminal 10 without being subjected to spread-spectrum processing.

By way of example, the satellite 20 may, according to the identification information, query a preestablished database, compare the identification information with information of a plurality of legitimate terminals 10 stored in the database, and determine the authorization detection result of the terminal 10. By way of another example, the satellite 20 may send the identification information of the terminal 10 to a server providing online authentication services. The server may determine whether the terminal 10 is legitimate in the communication network of satellite 20 according to the identification information, and receive the authorization detection result sent from the server.

It should be noted that the above descriptions are merely illustrative. In practical applications, any other suitable manner may be adopted to authenticate the terminal 10, which is not limited herein.

In some embodiments of the present disclosure, the satellite 20 may obtain the identification information of the terminal 10 according to the network access request, determine the authorization detection result of the terminal 10 according to the identification information, and send the network access response to the terminal 10 according to the authorization detection result. In this way, authentication detection of the terminal 10 may be realized, ensuring security and reliability of communication between the terminal 10 and the satellite 20. Moreover, the terminal 10 may operate in the paging message reception mode according to the network access response, so as to support real-time reception of notification information, thereby achieving an objective of improving performance of the terminal 10.

In some embodiments, the satellite 20 may include a paging message transmitting mode and a service communication mode. The paging message transmitting mode may refer to a mode in which the satellite 20 supports performing spread-spectrum processing on a signal and supports transmitting processing of a spread-spectrum signal obtained through the spread-spectrum processing. The service communication mode of the satellite 20 may refer to a mode in which the satellite 20 supports receiving and transmitting processing of a signal that is not subjected to spread-spectrum processing. Based on the above, the operation S604 of transmitting the spread-spectrum signal to the terminal 10 may include: transmitting the spread-spectrum signal to the terminal 10 in the paging message transmitting mode. The satellite communication method may further include: in a case where the satellite 20 operates in the service communication mode, sending a service signal to the terminal 10; and/or, receiving a service signal transmitted from the terminal 10. The service signal may be a signal that is not subjected to spread-spectrum processing, thereby realizing satellite communication services between the terminal 10 and the satellite 20 and meeting communication requirements through the communication network of satellite 20.

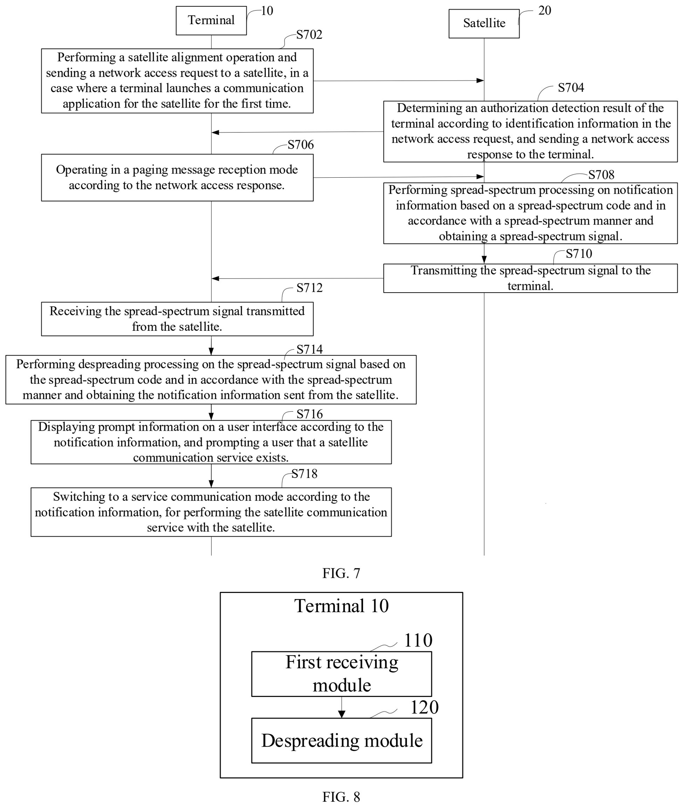

In some embodiments, as shown in FIG. 7, a satellite communication method may be provided, which is described by applying the method to the communication system shown in FIG. 1 and FIG. 2.

At operation S702, a terminal may perform a satellite alignment operation and send a network access request to a satellite, in a case where the terminal launches a communication application for the satellite for the first time.

At operation S704, the satellite may determine an authorization detection result of the terminal according to identification information in the network access request, and send a network access response to the terminal.

In a case where a user adopts the satellite 20 of the terminal 10 for communication for the first time, a satellite alignment operation may be performed to complete interaction with the communication network of satellite 20. In a case where the terminal 10 completes network access for the first time and completes authentication interaction with the network, the terminal 10 may already be a legitimate user in the communication network of satellite 20.

At operation S706, the terminal may operate in a paging message reception mode according to the network access response.

At operation S708, the satellite may perform spread-spectrum processing on notification information based on a spread-spectrum code and in accordance with a spread-spectrum manner and obtain a spread-spectrum signal.

At operation S710, the satellite may transmit the spread-spectrum signal to the terminal.

At operation S712, the terminal may receive the spread-spectrum signal transmitted from the satellite.

At operation S714, the terminal may perform despreading processing on the spread-spectrum signal based on the spread-spectrum code and in accordance with the spread-spectrum manner and obtain the notification information sent from the satellite.

At operation S716, the terminal may display prompt information on a user interface according to the notification information, and prompt a user that a satellite communication service exists. For example, the satellite communication service may be a short message or a missed incoming call.

At operation S718, the terminal may switch to a service communication mode according to the notification information, for performing the satellite communication service with the satellite.

The satellite communication method provided in some embodiments of the present disclosure may enable that, after the satellite 20 and the terminal 10 complete a network connection operation once, it is not necessary to perform a satellite alignment operation again or to maintain a satellite pointing posture. Through establishing a new paging channel of the satellite 20 between the satellite 20 and the terminal 10, and using spread-spectrum technology and despreading technology to obtain process gain, a spread-spectrum signal, transmitted from the satellite 20 and having low strength after long-distance transmission to the ground, may be demodulated by the terminal 10 to obtain notification information. In this way, the terminal 10 may be enabled to remain in a network-access standby state. That is, the terminal 10 may be kept connected to the communication network and capable of receiving notification information from the communication network of satellite 20 at any time, without missing or delaying satellite communication services such as short messages and telephone calls from the communication network of satellite 20. In addition, it is not necessary to increase transmission power of the satellite 20, original transmission power may be maintained, and a front-end radio frequency circuit of the satellite 20 may not need to be modified. A real-time reception of notification information by the terminal 10 can be realized, merely through adding a spread-spectrum circuit structure in the satellite 20 and adding a despreading circuit structure in a receiving path of the terminal 10, thereby improving communication performance of the terminal 10.

It should be understood that, although the operations in the flowcharts involved in the above embodiments are shown sequentially according to the arrows, these operations are not necessarily executed sequentially in the order indicated by the arrows. Unless explicitly stated herein, execution of these operations may not be strictly limited to a particular order, and these operations may be executed in other orders. Moreover, at least some of the operations in the flowcharts involved in the above embodiments may include a plurality of operations or a plurality of stages, and these operations or stages are not necessarily completed at the same moment, but may be executed at different moments. Execution orders of these operations or stages may also not necessarily be sequential, but may be performed alternately or in an interleaved manner with at least a part of other operations or other operations' stages.

Based on the same inventive concept, some embodiments of the present disclosure may further provide a terminal 10. The terminal 10 may be configured to perform the satellite communication method applied to the terminal 10 described above. An implementation solution provided by the terminal 10 for solving problems may be similar to the implementation solution recited in the above methods. Thus, limitations in one or more embodiments of the terminal 10 provided below may refer to the limitations of the satellite communication method described above, and details are not repeated herein.

In some embodiments, as shown in FIG. 8, a terminal 10 may be provided. The terminal 10 may include a first receiving module 110 and a despreading module 120.

The first receiving module 110 may be configured to support reception of a spread-spectrum signal transmitted from the satellite 20, in a case where the terminal 10 operates in a paging message reception mode. The despreading module 120 may be configured to support despreading processing on the spread-spectrum signal to obtain notification information sent from the satellite 20. The notification information may be configured to notify the terminal of the existence of satellite communication service.

The terminal 10, provided in some embodiments of the present disclosure, may support reception of the spread-spectrum signal transmitted from the satellite 20 through the first receiving module 110, and perform despreading processing on the spread-spectrum signal through the despreading module 120 to obtain notification information sent from the satellite 20. In this way, a paging channel of the satellite 20 may be newly established between the satellite 20 and the terminal 10. Through performing spread-spectrum processing on notification information by the satellite 20 and performing despreading processing on the spread-spectrum signal by the terminal 10, process gain may be introduced into the receive chain of the terminal 10, enabling the terminal 10 to obtain notification information through the spread-spectrum signal that is transmitted from the satellite 20 and to the ground over a long distance. In this way, receiving sensitivity of the terminal 10 may be improved, posture requirements for the terminal 10 to receive notification information may be reduced, or even imposing no posture requirement. As such, real-time reception of notification information by the terminal 10 may be realized. That is, the terminal 10 may not need to perform the satellite alignment operation or may not need to maintain the satellite-aligned posture, enabling the terminal 10 to remain in a network-access standby state. In other words, the terminal 10 may be enabled to receive notification information from the satellite 20 in real time, reducing missing or delayed awareness of satellite communication service. For example, a chance of missing services such as short messages and calls, etc., from the communication network of the satellite 20 may be reduced, thereby improving communication performance of the terminal 10. In addition, since some embodiments of the present disclosure introduce spread-spectrum process gain and improve receiving sensitivity of the terminal 10, it is not necessary to increase transmitting power of the satellite 20 and the original transmitting power can be maintained. Thus, an original circuit structure may be reused. Through introducing the despreading module 120 that supports despreading processing into the terminal 10, real-time reception of notification information by the terminal 10 may be realized, which is easy to implement and reduces modification difficulty.

In some embodiments, the despreading module 120 may be further configured to obtain a despread parameter corresponding to the spread-spectrum signal, and perform despreading processing on the spread-spectrum signal according to the despread parameter to obtain notification information sent from the satellite 20. The despread parameter may include a despread code and a despread manner.

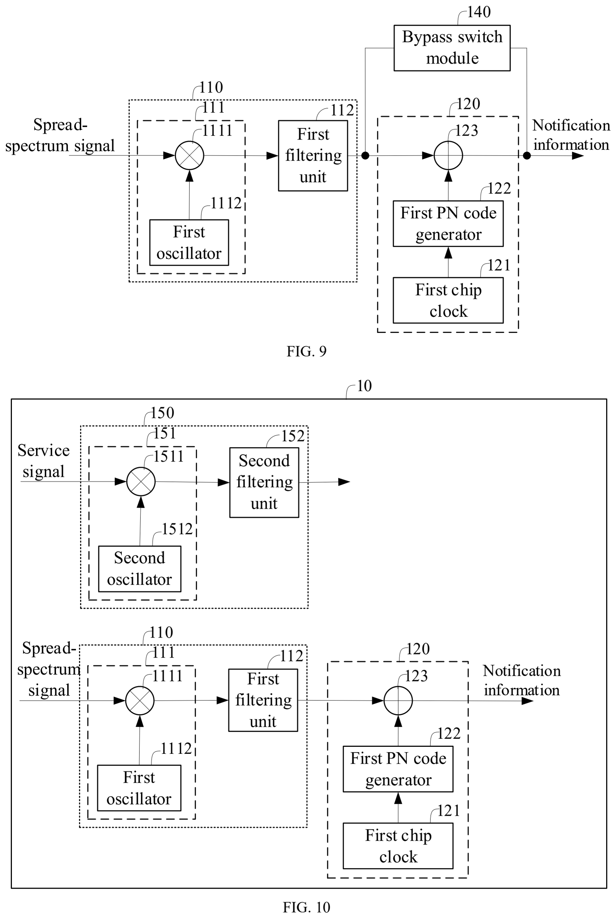

In some embodiments, as shown in FIG. 9, the despread code may include a first PN code. The despread manner may include a direct sequence despread manner. Correspondingly, the spread-spectrum code may include a third PN code. The spread-spectrum manner may include a DSSS manner. The despreading module 120 may include a first chip clock 121, a first PN code generator 122, and a first despreading unit 123.

The first chip clock 121 may be configured to provide a first clock signal. In some embodiments of the present disclosure, each chip clock, including the first chip clock 121 and a second chip clock, a third chip clock 211, and a fourth chip clock described later, may be a timing signal source that determines a time width of each chip in a PN sequence (PN code). A chip may be a minimum unit in a PN code, and a chip clock rate may be usually much higher than an information bit rate.

The chip clock may provide an accurate time reference for a despread code generator or a spread-spectrum code generator, ensuring that a transmitting end and a receiving end may synchronously generate the despread code and spread-spectrum code that are the same to each other. In addition, the chip clock rate may directly affect a generation speed of the despread code or the spread-spectrum code, thereby affecting an overall data transmission rate of the system. A higher chip clock rate may represent a wider signal bandwidth, but also may require higher processing capability. In practical applications, the chip clock rate may be set according to process gain, which is not limited herein.

The first PN code generator 122 may be configured to generate a first PN code according to the first clock signal. The first PN code generator 122 may be a hardware or software module. The first PN code may be the same as the third PN code configured by the satellite 20 to perform DSSS processing on the notification information.

The first despreading unit 123 may be configured to perform despreading processing on the spread-spectrum signal according to the first PN code through using the direct sequence despread manner, and to obtain notification information sent from the satellite 20. By way of example, the first despreading unit 123 may include a first correlator. The first correlator may be configured to perform correlation processing on the spread-spectrum signal according to the first PN code, and to obtain notification information sent from the satellite 20.

In some embodiments, as shown in FIG. 9 and FIG. 10, the first receiving module 110 may include a first demodulation unit 111 and a first filtering unit 112. The first demodulation unit 111 may support demodulation processing on the spread-spectrum signal. By way of example, the first demodulation unit 111 may include a first mixer 1111 and a first oscillator 1112. The first oscillator 1112 may be configured to generate a first local oscillator signal. The first mixer 1111 may be configured to perform demodulation processing according to the first local oscillator signal and the spread-spectrum signal. The first filtering unit 112 may support filtering processing on the demodulated spread-spectrum signal.

In some embodiments, the terminal 10 may be configured to perform demodulation processing on the received spread-spectrum signal through the first demodulation unit 111 and to obtain a demodulated spread-spectrum signal. The terminal 10 may be configured to further perform filtering processing on the demodulated spread-spectrum signal through the first filtering unit 112 and to obtain a filtered broadband signal. The terminal 10 may be configured to further provide the first clock signal through the first chip clock 121 and to generate the first PN code through the first PN code generator 122 according to the first clock signal. The terminal 10 may be configured to further perform despreading processing on the spread-spectrum signal through the first despreading unit 123 based on the first PN code through using the direct sequence despread manner and to obtain notification information sent from the satellite 20. That is, the despreading processing on the spread-spectrum signal may be realized through using a direct sequence despreading technology, thereby realizing real-time reception of notification information, enabling the terminal 10 to obtain satellite communication services for the terminal 10 in real time, and improving communication performance of the terminal 10.

In some embodiments, the despread code may include a first frequency hopping code. The despread manner may include a frequency hopping despread manner. Correspondingly, the spread-spectrum code may include a second frequency hopping code. The spread-spectrum manner may include a frequency hopping spread-spectrum manner. The despreading module 120 may include a second chip clock, a second PN code generator, a first frequency synthesizer, and a second despreading unit.

The second chip clock may be configured to provide a second clock signal.

The second PN code generator may be configured to generate a second PN code according to the second clock signal. The second PN code generator may be configured to generate a series of pseudo-random values according to a predetermined algorithm, where each value may correspond to one frequency point and these values may be arranged according to a certain rule to form a frequency hopping pattern.

The first frequency synthesizer may be configured to generate a first frequency hopping code based on the second clock signal and the second PN code. The first frequency synthesizer may be configured to adjust its output frequency based on the second PN code to generate the first frequency hopping code.

The second despreading unit may be configured to perform despreading processing on the spread-spectrum signal based on the first frequency hopping code through using the frequency hopping despread manner, and to obtain notification information sent from the satellite 20. By way of example, the second despreading unit may include a second correlator. The second correlator may be configured to perform correlation processing on the spread-spectrum signal based on the first frequency hopping code, and to obtain notification information sent from the satellite 20.

According to some embodiments of the present disclosure, in the terminal 10, the despreading module 120 may be configured to provide the second clock signal through the second chip clock. The second PN code generator may be configured to generate the second PN code based on the second clock signal. The first frequency synthesizer may be configured to generate the first frequency hopping code based on the second clock signal and the second PN code. The first despreading unit 123 may be configured to perform despreading processing on the spread-spectrum signal based on the first PN code through the frequency hopping despread manner, and to obtain notification information sent from the satellite 20. That is, the despreading processing on the spread-spectrum signal may be realized using a frequency hopping despreading technology, thereby realizing real-time reception of notification information, enabling the terminal 10 to obtain satellite communication services for the terminal 10 in real time, and improving communication performance of the terminal 10.

In some embodiments, the terminal 10 may include a paging message reception mode and a service communication mode. The terminal 10 may support receiving a spread-spectrum signal in the paging message reception mode. Power consumption of the terminal 10 in the paging message reception mode may be lower than power consumption of the terminal 10 in the service communication mode.

As shown in FIG. 9, the terminal 10 may further include a bypass switch module 140. The bypass switch module 140 may be connected in parallel with the despreading module 120. The bypass switch module 140 may be configured to select and conduct or turn on the receiving path in which the bypass switch module 140 is located. By way of example, the bypass switch module 140 may include a single-pole single-throw switch, a single-pole multi-throw switch, or other types of switches, which is not limited herein.

In a case where the terminal 10 is in a paging message reception mode, the bypass switch module 140 may be in an open state. In this case, the terminal 10 may support reception and despreading processing of the spread-spectrum signal through a receiving path in which the despreading module 120 is located, so as to obtain notification information sent from the satellite 20. In a case where the terminal 10 is in the service communication mode, the bypass switch module 140 may be in a conductive state. In this case, the despreading module 120 may be short-circuited by the bypass switch module 140, and the terminal 10 may support reception of service signals through the receiving path in which the bypass switch module 140 is located, so as to support communication between the terminal 10 and the satellite 20.

In some embodiments of the present disclosure, the terminal 10 may further include the bypass switch module 140. The terminal 10 may select to conduct the receiving path in which the bypass switch module 140 is located through the bypass switch module 140, thereby selecting to short-circuit the despreading module 120. Moreover, in a case where the terminal 10 operates in the paging message reception mode, the terminal 10 may need to perform despreading processing on the spread-spectrum signal transmitted from the satellite 20. In this case, the bypass switch module 140 may be controlled to be turned off or in an open state. As a result, the terminal 10 may support reception and despreading processing of the spread-spectrum signal through the receiving path in which the despreading module 120 is located, obtain the notification information sent from the satellite 20, and realize real-time reception of the notification information. In addition, in a case where the terminal 10 operates in the service communication mode, the terminal 10 may control the bypass switch module 140 to be in a conductive state. Since the despreading module 120 may be short-circuited by the bypass switch module 140, the terminal 10 may not need to perform spread-spectrum processing on the service signal transmitted from the satellite 20, thereby realizing normal communication between the terminal 10 and the satellite 20.

In some embodiments, as shown in FIG. 10, the terminal 10 may include a paging message reception mode and a service communication mode. The terminal 10 may support reception of spread-spectrum signals in the paging message reception mode. Power consumption of the terminal 10 in the paging message reception mode may be lower than power consumption of the terminal 10 in the service communication mode.

The terminal 10 may further include a second reception module 150. The second reception module 150 may be configured to support reception of service signals transmitted from the satellite 20, in a case where the terminal 10 operates in a communication mode. For example, the second reception module 150 may adopt the same device structure as the first reception module 110. For example, the second reception module 150 may include a second demodulation unit 151 and a second filtering unit 152. The second demodulation unit 151 may support demodulation processing of service signals. For example, the second demodulation unit 151 may include a second mixer 1511 and a second oscillator 1512. The second oscillator 1512 may be configured to generate a second local oscillator signal. The second mixer 1511 may be configured to perform demodulation processing according to the second local oscillator signal and the service signal. The second filtering unit 152 may support filtering processing of the demodulated service signal.

In some embodiments of the present disclosure, the terminal 10 may further include the second reception module 150. The terminal 10 may support reception of service signals transmitted from the satellite 20 through the second reception module 150, in a case where the terminal 10 operates in the communication mode. That is, the terminal 10 may be provided with two receiving paths, where one receiving path may include the first reception module 110 and the despreading module 120, and the other receiving path may include the second reception module 150. Based on the above, the terminal 10 may support despreading processing and reception of spread-spectrum signals through the receiving path in which the first reception module 110 and the despreading module 120 are located, thereby realizing real-time reception of notification information. Moreover, the terminal 10 may support reception of service signals through the receiving path in which the second reception module 150 is located, thereby supporting normal communication between the terminal 10 and the satellite 20. In this way, communication performance of the terminal 10 may be improved.

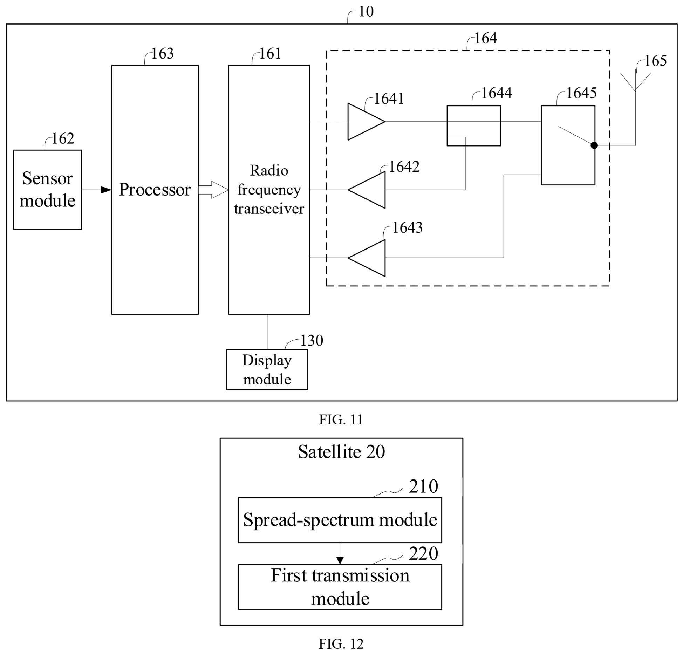

In some embodiments, as shown in FIG. 11, a terminal 10 may be provided. The terminal 10 may include a radio frequency transceiver 161, a sensor module 162, a processor 163, a radio frequency front-end module 164, an antenna 165, and a display module 130.

The radio frequency transceiver 161 may integrate a first mixer 1111, a first oscillator 1112, a first filtering unit 112, a despreading module 120, and a bypass switch module 140. The despreading module 120 may include a first chip clock 121, a first PN code generator 122, and a first despreading unit 123. The first mixer 1111 may be respectively connected to the first oscillator 1112 and the first filtering unit 112. The first filtering unit 112 may be respectively connected to the despreading module 120 and the bypass switch module 140. The despreading module 120 may be connected in parallel with the bypass switch module 140. The first oscillator 1112 may be configured to provide a first local oscillator signal. The first mixer 1111 may be configured to perform demodulation processing according to the first local oscillator signal and a spread-spectrum signal. The first filtering unit 112 may be configured to perform filtering processing on the demodulated spread-spectrum signal. The despreading module may 120 be configured to perform despreading processing on the filtered spread-spectrum signal according to a first PN code through a direct sequence despread manner, so as to obtain notification information sent from the satellite 20. The radio frequency transceiver 161 may further be configured to support transmission and reception of service signals. A structure of the radio frequency transceiver 161 may refer to FIG. 9 and the foregoing related descriptions.

The radio frequency front-end module 164 may include a power amplifier 1641, a first low-noise amplifier 1642, a second low-noise amplifier 1643, a directional coupler 1644, and a radio frequency switch device 1645. The radio frequency transceiver 161 may be respectively connected to an input terminal of the power amplifier 1641, an output terminal of the first low-noise amplifier 1642, an output terminal of the second low-noise amplifier 1643, and the display module 130. Two first terminals of the directional coupler 1644 may be respectively connected to an output terminal of the power amplifier 1641 and an input terminal of the first low-noise amplifier 1642. Two first terminals of the radio frequency switch device 1645 may be respectively connected to a second terminal of the directional coupler 1644 and an input terminal of the second low-noise amplifier 1643. A second terminal of the radio frequency switch device 1645 may be connected to the antenna 165. The power amplifier 1641 supports power amplification processing of service signals. The directional coupler 1644 may be configured to support coupling processing of the power-amplified service signal, and to output a forward coupled signal and a reverse coupled signal. The first low-noise amplifier 1642 may be configured to support low-noise amplification processing of the reverse coupled signal, so as to enable the radio frequency transceiver 161 to support power calibration (feedback receiver, FBRX). The second low-noise amplifier 1643 may be configured to support low-noise amplification processing of spread-spectrum signals and service signals received by the antenna 165. The radio frequency switch device 1645 may be configured to select conduction of paths between the directional coupler 1644 and the antenna 165, and between the second low-noise amplifier 1643 and the antenna 165, respectively. The antenna 165 may be configured to support reception of spread-spectrum signals, and to support transmission and reception of service signals.

The sensor module 162 may be configured to collect sensor data. The processor 163 may be respectively connected to the sensor module 162 and the radio frequency transceiver 161. The processor 163 may support data processing of the sensor data. The processor 163 may be a central processing unit (CPU). The display module 130 may be configured to display prompt information according to the notification information, so as to prompt a user that a satellite communication service exists.

Based on the same inventive concept, some embodiments of the present disclosure may further provide a satellite 20. The satellite 20 may be configured to implement the above-described satellite communication method applied to the satellite 20. Implementation solutions provided by the satellite 20 for solving the problems may be similar to the implementation solutions described in the above method. Thus, limitations in one or more embodiments of the satellite 20 provided below may refer to the limitations of the satellite communication method described above, and details are not repeated herein.

In some embodiments, as shown in FIG. 12, a satellite 20 may be provided. The satellite 20 may include a spread-spectrum module 210 and a first transmission module 220. The spread-spectrum module 210 may be configured to support spread-spectrum processing of notification information and to obtain a spread-spectrum signal. The first transmission module 220 may be configured to support transmission processing of the spread-spectrum signal, so as to indicate the terminal 10 to perform despreading processing on the received spread-spectrum signal and obtain the notification information. The notification information may be configured to notify the terminal 10 that a satellite communication service exists.

In some embodiments, the spread-spectrum module 210 may be further configured to obtain a spread-spectrum parameter corresponding to the notification information, perform spread-spectrum processing on the notification information according to the spread-spectrum parameter, and obtain the spread-spectrum signal. The spread-spectrum parameter may include a spread-spectrum code and a spread-spectrum manner.

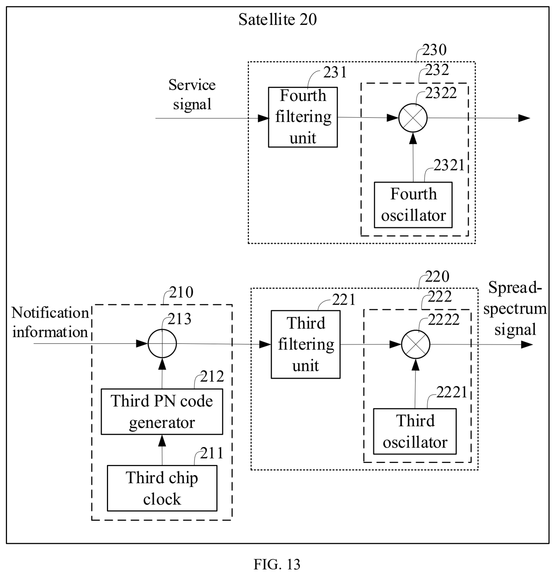

In some embodiments, as shown in FIG. 13, the spread-spectrum code may include a third PN code. The spread-spectrum manner may include a DSSS manner. The spread-spectrum module 210 may include a third chip clock 211, a third PN code generator 212, and a first spread-spectrum unit 213. The third chip clock 211 may be configured to provide a third clock signal. The third PN code generator 212 may be configured to generate a third PN code based on the third clock signal. The first spread-spectrum unit 213 may be configured to perform spread-spectrum processing on the notification information according to the third PN code through the DSSS manner and to obtain the spread-spectrum signal.

In some embodiments, the spread-spectrum code may include a second frequency hopping code. The spread-spectrum manner may include a FHSS manner. The spread-spectrum module 210 may include a fourth chip clock, a fourth PN code generator, a second frequency synthesizer, and a second spread-spectrum unit. The fourth chip clock may be configured to provide a fourth clock signal. The fourth PN code generator may be configured to generate a fourth PN code based on the fourth clock signal. The second frequency synthesizer may be configured to generate a second frequency hopping code based on the fourth clock signal and the fourth PN code. The second spread-spectrum unit may be configured to perform spread-spectrum processing on the notification information based on the second frequency hopping code through a frequency hopping despread manner, and to obtain the spread-spectrum signal.

In some embodiments, as shown in FIG. 13, the satellite 2 may further include a second transmission module 230. The second transmission module 230 may be configured to support transmission processing of service signals.

The satellite 20 may include a paging message transmission mode and a service communication mode. The satellite 20 may be configured to transmit a spread-spectrum signal to the terminal 10 through the first transmission module 220 in the paging message transmission mode. The satellite 20 may be configured to receive a service signal transmitted from the terminal 10 through the second transmission module 230 in the service communication mode.

For example, the first transmission module 220 may include a third filtering unit 221 and a first modulation unit 222. The third filtering unit 221 may support filtering processing of the spread-spectrum signal. The first modulation unit 222 may support modulation processing of the filtered spread-spectrum signal. For example, the first modulation unit 222 may include a third oscillator 2221 and a third mixer 2222. The third oscillator 2221 may be configured to provide a third local oscillator signal. The third mixer 2222 may be configured to perform modulation processing according to the third local oscillator signal and the filtered spread-spectrum signal.

For example, the second transmission module 230 may include a second modulation unit 232 and a fourth filtering unit 231. The fourth filtering unit 231 may support filtering processing of service signals. The second modulation unit 232 may support modulation processing of the filtered service signal. For example, the second modulation unit 232 may include a fourth oscillator 2321 and a fourth mixer 2322. The fourth oscillator 2321 may be configured to provide a fourth local oscillator signal. The fourth mixer 2322 may be configured to perform modulation processing according to the fourth local oscillator signal and the filtered service signal.

In some embodiments of the present disclosure, the satellite 20 may further include the second transmission module 230. The satellite 20 may support transmission processing of service signals transmitted from the satellite 20 through the second transmission module 230. That is, the satellite 20 may be provided with two transmission paths. One transmission path may include the first transmission module 220 and the spread-spectrum module 210, and the other transmission path may include the second transmission module 230. Based on the above, the terminal 10 may support spread-spectrum processing and transmission processing of notification information through the transmission path in which the first transmission module 220 and the spread-spectrum module 210 are located, thereby providing technical support for the terminal 10 to support real-time reception of the notification information. Moreover, the satellite 20 may support transmission processing of service signals through the transmission path in which the second transmission module 230 is located, thereby supporting normal communication between the satellite 20 and the terminal 10.

Each module in the terminal 10 and the satellite 20 described above may be implemented wholly or partially by software, hardware, or a combination thereof. The above modules may be embedded in or independent of the processor 163 in a computing device in the form of hardware, or may be stored in a memory of the computing device in the form of software, so as to facilitate invocation and execution by the processor 163 of operations corresponding to the above modules.

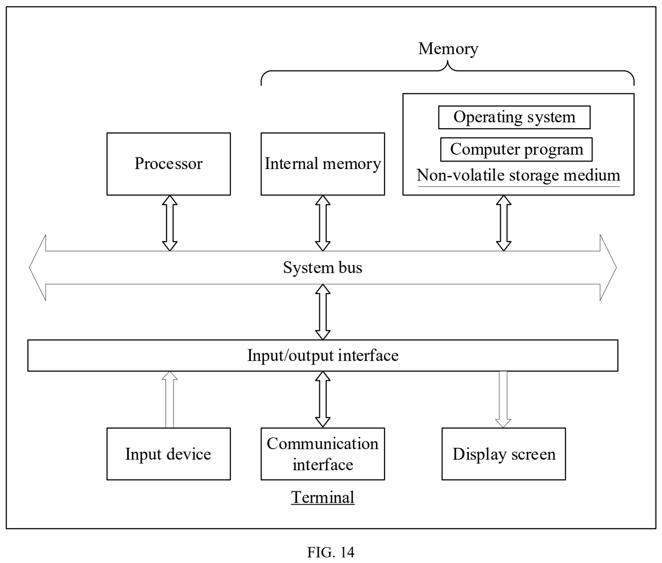

In some embodiments, a terminal 10 may be provided, and an internal structure view thereof may be as shown in FIG. 14. The terminal 10 may include a processor, a memory, a communication interface, a display screen, and an input device that are connected to each other through a system bus. The processor of the terminal 10 may be configured to provide computing and control capabilities. The memory of the terminal 10 may include a non-volatile storage medium and an internal memory. The non-volatile storage medium may store an operating system and a computer program. The internal memory may provide an operating environment for operation of the operating system and the computer program in the non-volatile storage medium. The communication interface of the terminal 10 may be configured to perform wired or wireless communication with an external terminal 10. The wireless communication may be implemented through WIFI, a mobile cellular network, near field communication (NFC), or other technologies. In a case where the computer program is executed by the processor, a satellite communication method may be implemented. The display screen of the terminal 10 may be a liquid crystal display screen or an electronic ink display screen. The input device of the terminal 10 may be a touch layer covering the display screen, or may be keys, a trackball, or a touchpad disposed on a housing of the terminal 10, or may be an external keyboard, touchpad, mouse, or the like.

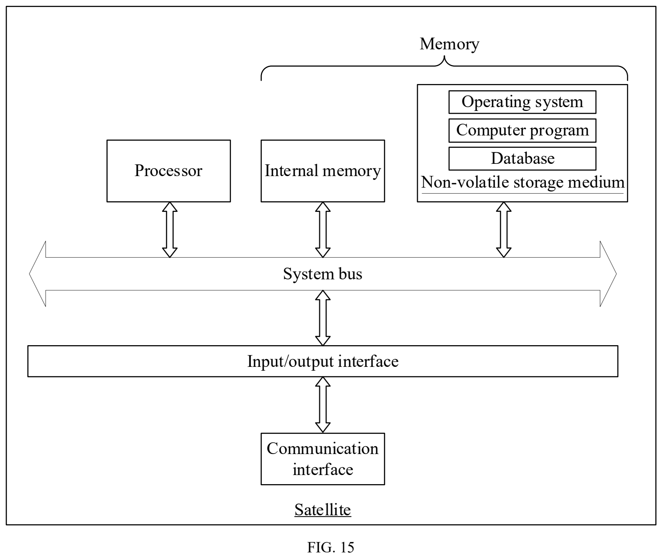

In some embodiments, a satellite 20 may be provided, and an internal structure diagram thereof may be as shown in FIG. 15. The satellite 20 may include a processor, a memory, and a network interface connected through a system bus. The processor of the satellite 20 may be configured to provide computing and control capabilities. The memory of the satellite 20 may include a non-volatile storage medium and an internal memory. The non-volatile storage medium may store an operating system, a computer program, and a database. The internal memory may provide an operating environment for operation of the operating system and the computer program in the non-volatile storage medium. The network interface of the satellite 20 may be configured to perform communication with an external terminal 10 through a network connection. In a case where the computer program is executed by the processor, a satellite communication method may be performed.

A person skilled in the art may understand that the structures shown in FIG. 14 and FIG. 15 are merely block views of parts of structures related to the solutions of the present disclosure, and do not constitute limitations on computing devices to which the solutions of the present disclosure are applied. A computing device may include more or fewer components than those shown in the figures, or may combine certain components, or may have different component arrangements.

In some embodiments, a terminal 10 may be provided. The terminal 10 may include a first memory and a first processor. The first memory may store a first computer program. In a case where the first processor executes the first computer program, the operations of the method described above may be performed.

In some embodiments, a satellite 20 may be provided. The satellite 20 may include a second memory and a second processor. The second memory may store a second computer program. In a case where the second processor executes the second computer program, the operations of the method described above may be performed.

In some embodiments, a communication system may be provided. The communication system may include the terminal 10 described above and the satellite 20 described above.

In some embodiments, a computer-readable storage medium may be provided, on which a computer program is stored. In a case where the computer program is executed by a processor, the operations of the satellite communication method described above may be performed. The computer program may include the first computer program or the second computer program described above.

In some embodiments, a computer program product may be provided. The computer program product may include a computer program. In a case where the computer program is executed by a processor, the operations of the satellite communication method described above may be performed. The computer program may include the first computer program or the second computer program described above.

It should be noted that user information (including but not limited to user device information, user personal information, and the like) and data (including but not limited to data used for analysis, stored data, displayed data, and the like) involved in the present disclosure are information and data that are authorized by users or fully authorized by all relevant parties.

A person of ordinary skill in the art may understand that all or part of the processes of implementing the methods in the above embodiments may be completed by instructing related hardware through a computer program. The computer program may be stored in a non-volatile computer-readable storage medium, and when executed, the computer program may include the processes of the embodiments of the methods described above. Any reference to a memory, a database, or other media used in some embodiments provided by the present disclosure may include at least one of non-volatile and volatile memories. The non-volatile memory may include a read-only memory (ROM), a magnetic tape, a floppy disk, a flash memory, an optical storage, a high-density embedded non-volatile memory, a resistive random-access memory (ReRAM), a magnetoresistive random-access memory (MRAM), a ferroelectric random-access memory (FRAM), a phase change memory (PCM), a graphene memory, or the like. The volatile memory may include a random access memory (RAM) or an external high-speed cache, or the like. By way of illustration rather than limitation, the RAM may be in various forms, such as a static random access memory (SRAM) or a dynamic random access memory (DRAM). Databases involved in the embodiments provided by the present disclosure may include at least one of a relational database and a non-relational database. The non-relational database may include a blockchain-based distributed database and the like, without limitation. Processors involved in some embodiments provided by the present disclosure may include a general-purpose processor, a central processing unit, a graphics processing unit, a digital signal processor, a programmable logic device, a data processing logic device based on quantum computing, or the like, without limitation.

The technical features of the above embodiments may be combined arbitrarily. For the sake of brevity, not all possible combinations of the technical features in the above embodiments are described. However, as long as no contradiction exists in the combinations of these technical features, such combinations shall be regarded as falling within the scope recited in the present specification.

The above embodiments merely express several implementations of the present disclosure, and the descriptions thereof are relatively specific and detailed. However, they should not be construed as limiting the scope of the present disclosure. It should be noted that a person of ordinary skill in the art may make various modifications and improvements without departing from the concept of the present disclosure, and all such modifications and improvements fall within the protection scope of the present disclosure. Therefore, the protection scope of the present disclosure shall be subject to the appended claims.

## Claims

1. A satellite communication method, applied to a terminal (10), and **characterized by** comprising:
receiving (S302) a spread-spectrum signal transmitted from a satellite; and
performing (S304) despreading processing on the spread-spectrum signal and obtaining notification information sent from the satellite;
wherein the spread-spectrum signal is obtained through the satellite performing spread-spectrum processing based on the notification information, and the notification information is configured to notify the terminal that a satellite communication service exists.

2. The method as claimed in claim 1, wherein performing (S304) the despreading processing on the spread-spectrum signal and obtaining the notification information sent from the satellite, comprises:
obtaining a despread parameter corresponding to the spread-spectrum signal, wherein the despread parameter comprises a despread code and a despread manner; and
performing despreading processing on the spread-spectrum signal according to the despread parameter and obtaining the notification information sent from the satellite.

3. The method as claimed in claim 2, wherein the despread code comprises a first pseudo noise code, and the despread manner comprises a direct sequence despread manner; or,
the despread code comprises a first frequency hopping code, and the despread manner comprises a frequency hopping despread manner; or,
the despread code comprises a first time hopping code, and the despread manner comprises a time hopping despread manner.

4. The method as claimed in any one of claims 1-3, wherein the terminal comprises a paging message reception mode and a service communication mode;
the method further comprises:
switching (S718) to a service communication mode according to the notification information, wherein the terminal supports receiving the spread-spectrum signal in the paging message reception mode, and power consumption of the terminal in the paging message reception mode is lower than power consumption of the terminal in the service communication mode; and
transmitting a service signal to the satellite to perform the satellite communication service with the satellite, in a case where the terminal operates in the service communication mode.

5. The method as claimed in any one of claims 1-3, further comprising:
performing a satellite alignment operation with the satellite; and
establishing a network connection.

6. A satellite communication method, applied to a satellite (20), and **characterized by** comprising:
performing (S602) spread-spectrum processing on notification information and obtaining a spread-spectrum signal; and
transmitting (S604) the spread-spectrum signal to a terminal, for indicating the terminal to perform despreading processing on the received spread-spectrum signal and obtain the notification information;
wherein the notification information is configured to notify the terminal that a satellite communication service exists.

7. The method as claimed in claim 6, wherein performing (S602) the spread-spectrum processing on the notification information and obtaining the spread-spectrum signal, comprises:
obtaining a spread-spectrum parameter corresponding to the notification information, wherein the spread-spectrum parameter comprises a spread-spectrum code and a spread-spectrum manner; and
performing the spread-spectrum processing on the notification information according to the spread-spectrum parameter and obtaining the spread-spectrum signal.

8. The method as claimed in claim 7, wherein the obtaining the spread-spectrum parameter corresponding to the notification information, comprises:
obtaining a process gain of the spread-spectrum signal, wherein the process gain represents a ratio of a bandwidth of the spread-spectrum signal to a bandwidth of the notification information; and
obtaining the spread-spectrum parameter corresponding to the notification information based on the process gain.

9. The method as claimed in claim 7, wherein the spread-spectrum code comprises a third pseudo noise code, and the spread-spectrum manner comprises a direct sequence spread spectrum manner; or,
the spread-spectrum code comprises a second frequency hopping code, and the spread-spectrum manner comprises a frequency hopping spread spectrum manner; or,
the spread-spectrum code comprises a second time hopping code, and the spread-spectrum manner comprises a time hopping spread spectrum manner.

10. The method as claimed in any one of claims 6-9, further comprising:
receiving a network access request sent from the terminal; and
sending a network access response to the terminal according to the network access request, for indicating the terminal to operate in a paging message reception mode.

11. The method as claimed in claim 10, wherein sending the network access response to the terminal according to the network access request, comprises:
obtaining identification information of the terminal based on the network access request;
determining an authorization detection result of the terminal based on the identification information, wherein the authorization detection result is configured to indicate whether the terminal is legitimate in a communication network of the satellite; and
sending the network access response to the terminal according to the authorization detection result.

12. A terminal (10), **characterized by** comprising a first memory and a first processor, wherein the first memory stores a first computer program, and the first processor, when executing the first computer program, is configured to perform an operation of the method as claimed in any one of claims 1-5.

13. A satellite (20), **characterized by** comprising a second memory and a second processor, wherein the second memory stores a second computer program, and the second processor, when executing the second computer program, is configured to perform an operation of the method as claimed in any one of claims 6-11.

14. A communication system, **characterized by** comprising the terminal (10) as claimed in claim 12 and the satellite (20) as claimed in claim 13.

15. A computer-readable storage medium, on which a computer program is stored, **characterized in that** the computer program, when executed by a processor, is configured to perform an operation of the method as claimed in any one of claims 1-11.
